# EUROPÄISCHE PATENTSCHRIFT

(11) **EP 2 986 475 B1**
(45) Veröffentlichungstag und Bekanntmachung des Hinweises auf die Patenterteilung: **21.02.2018**
(21) Anmeldenummer: 14706840.7
(22) Anmeldetag: 26.02.2014
(51) Int. Cl.: B60R 99/00

(54) **VORRICHTUNG MIT EINER KAMERAEINHEIT UND EINEM DOPPELWANDIGEN GEHÄUSE**
DEVICE HAVING A CAMERA UNIT AND A DOUBLE-WALLED HOUSING
DISPOSITIF AVEC ENSEMBLE CAMÉRA ET BOÎTIER À DOUBLE PAROI

(30) Priorität: 18.04.2013 DE 102013103930
(43) Veröffentlichungstag der Anmeldung: 24.02.2016
(73) Patentinhaber: Huf Hülsbeck & Fürst GmbH & Co. KG, 42551 Velbert (DE)
(72) Erfinder: SCHÜTZ, Heiko, 42549 Velbert (DE); BUSCHMANN, Gerd, 42553 Velbert (DE)
(74) Vertreter: Vogel, Andreas
(86) Internationale Anmeldenummer: PCT/EP2014/053767
(87) Internationale Veröffentlichungsnummer: WO 2014/170055

(56) Entgegenhaltungen:
- WO-A2-2004/012962
- US-A1- 2004 114 039

## Beschreibung

Die Erfindung betrifft eine Vorrichtung mit einer Kameraeinheit, die zur Bilderfassung des Außenbereiches eines Kraftfahrzeuges dient, mit einem Gehäuse, in dem die Kameraeinheit bewegbar angeordnet ist, einem Schutzelement, das zwischen einer Offenstellung und einer Schließstellung bringbar ist, wobei in der Schließstellung des Schutzelementes die Kameraeinheit eine Ruheposition einnimmt, in der die Kameraeinheit vom Außenbereich unzugänglich hinter dem Schutzelement sich befindet, und in der Offenstellung des Schutzelementes die Kameraeinheit sich in der aktiven Position zur Bilderfassung befindet. Des Weiteren betrifft die Erfindung ein Verfahren zur Montage einer Vorrichtung, die zur Bilderfassung des Außenbereiches eines Kraftfahrzeuges dient.

Der Einsatz von Kameraeinheiten zur Fahrzeugumfelderfassung ist bereits bekannt. Derartige Kameraeinheiten kommen beispielsweise als Einpark- und/oder Rangierhilfen bei Kraftfahrzeugen zum Einsatz, um insbesondere die mit den konventionellen Spiegeln des Kraftfahrzeuges nicht einsehbaren Bereiche um das Kraftfahrzeug herum zu erfassen. Aus dem Stand der Technik ist es bekannt, dass die Kameraeinheit eine Ruheposition einnehmen kann, in der keine Bilderfassung erfolgt. Zudem kann die Kameraeinheit eine aktive Position einnehmen, um das Fahrzeugumfeld zu erfassen. In der Regel fährt die Kameraeinheit in diese aktive Position aus, welches über einen Antrieb erfolgt, der in Wirkverbindung mit der Kameraeinheit steht. Nachteiligerweise hat sich gezeigt, dass insbesondere in der aktiven Position der Kameraeinheit Flüssigkeit, insbesondere Feuchtigkeit in das Gehäuse der Kameraeinheit eindringen kann. Dieses ist insbesondere dann besonders der Fall, wenn die Kameraeinheit bezogen auf die Standfläche des Kraftfahrzeuges schräg eingebaut ist. Nachteiligerweise sammelt sich in etwaigen Anwendungsfällen Flüssigkeit, insbesondere Regenwasser innerhalb des Kameragehäuses, welches dort oftmals nicht mehr vernünftig ablaufen kann.

Aus der US2004/114039 A1 ist eine gattungsgemäße Vorrichtung mit einer Kameraeinheit bekannt.

Aufgabe der vorliegenden Erfindung ist es, die oben genannten Nachteile zu vermeiden, insbesondere eine Vorrichtung zu schaffen, die eine Ansammlung von Flüssigkeit innerhalb des Gehäuses der Kameraeinheit vermeidet. Zudem soll eine Vorrichtung mit einer Kameraeinheit geschaffen werden, die montagefreundlich zusammenbaubar ist und eine kompakte Einheit darstellt.

Die Aufgabe der vorliegenden Erfindung wird durch sämtliche Merkmale des unabhängigen Patentanspruches 1 gelöst. In den abhängigen Ansprüchen sind bevorzugte Weiterbildungen ausgeführt.

Erfindungsgemäß ist das Gehäuse zumindest bereichsweise derart doppelwandig ausgebildet ist, dass das Gehäuse eine innere Wandung mit zumindest einer Öffnung aufweist und das Gehäuse eine äußere Wandung aufweist, die mit einer Austrittsöffnung ausgebildet ist, wodurch etwaig im Gehäuse sich befindende Flüssigkeit zum Außenbereich abtransportierbar ist.

Besonders erfindungswesentlich ist, dass das Gehäuse der Kameraeinheit dafürausgebildet ist von außen eintretende Flüssigkeit zuverlässig wegzuführen, um etwaige Funktionsstörungen zu vermeiden. Die Öffnung der inneren

Wandung dient dazu, die etwaig eintretende Flüssigkeit in Richtung äußere Wandung abfließen zu lassen. Zudem ist die äußere Wandung derart zur Austrittsöffnung ausgerichtet, dass die Flüssigkeit leicht dorthin fließen kann und somit aus der erfindungsgemäßen Vorrichtung gelangt. Ein wesentlicher Vorteil der Doppelwandigkeit des Gehäuses ist, dass über die äußere Wandung gezielt der Austrittsort der Flüssigkeit definiert ist, welches wichtig in der Gesamtkonstruktion des Kraftfahrzeuges sein kann. Die innere Wandung des Gehäuses kann auch mehrere Öffnungen aufweisen, die in der Lage sind etwaige Flüssigkeit in Richtung äußere Wandung durchtreten zu lassen. Die erfindungsgemäße Vorrichtung kann mit einschließen, dass die innere Wandung und die äußere Wandung ein Bestandteil eines gemeinsamen Gehäuses ist, welches insbesondere monolithisch und/oder einstückig in seiner Gesamtkonstruktion ist. Ebenfalls umfasst die Erfindung, dass die innere Wandung sowie die äußere Wandung aus zwei unterschiedlichen Gehäusebestandteilen ausgebildet sind, die bei der Montage zueinander befestigbar sind.

Zudem kann die Erfindung mit umfassen, dass das Gehäuse ein inneres Gehäuse und ein zum inneren Gehäuse angeordnetes äußeres Zusatzgehäuse aufweist, wobei das innere Gehäuse mit der inneren Wandung ausgebildet ist und das Zusatzgehäuse die Austrittsöffnung aufweist. Das Zusatzgehäuse kann zumindest an definierten Bereichen das innere Gehäuse umfassen, wobei vorteilhafterweise die Kameraeinheit bewegbar im inneren Gehäuse gelagert ist. Das Zusatzgehäuse sowie das innere Gehäuse sind aus einem Kunststoffmaterial ausgebildet, wobei vorteilhafterweise das innere Gehäuse aus Polyamid ist. Vorteilhafterweise ist das innere Gehäuse glasfaserverstärkt, wobei der Anteil der Glasfaserverstärkung vorteilhafterweise 20 bis 40%, insbesondere 30% bzgl. des Gewichtsanteils beträgt. Da Kräfte bei der Bewegung der Kameraeinheit auf das Gehäuse, insbesondere am inneren Gehäuse wirken, ist ein soeben genannter, verstärkter Kunststoff von Vorteil. Die Verstärkung des Kunststoffes kann durch weitere Materialalternativen bewirkt werden, insbesondere durch einen Zusatz von Kohlenstoffmaterial.

Damit die Flüssigkeit zuverlässig in Richtung Austrittsöffnung abfließen kann, kann in einer möglichen Ausgestaltung der erfindungsgemäßen Vorrichtung die äußere Wandung im der Austrittsöffnung zugewandten Bereich trichterartig ausgebildet sein.

Eine die Erfindung verbessernde Maßnahme kann vorsehen, dass die Öffnung der inneren Wandung oberhalb bezogen auf die Standfläche des Kraftfahrzeuges zur Austrittsöffnung angeordnet ist. Hierdurch wird bewirkt, dass Flüssigkeit innerhalb des Gehäuses zum einen durch die Öffnung der inneren Wandung abfließen kann. Zum anderen ist die Lage dieser Öffnung, die oberhalb der Austrittsöffnung liegt, entsprechend der Geometrie des inneren Gehäuses variierbar. Vorteilhaft ist, dass an den Stellen, an denen sich bevorzugt Flüssigkeit innerhalb des inneren Gehäuses bildet, auch die entsprechenden Öffnungen vorliegen, die ein Abfließen der Flüssigkeit in Richtung äußere Wandung ermöglichen.

Die erfindungsgemäße Vorrichtung kann umfassen, dass in der Schließstellung das Schutzelement schräg zur Standfläche des Kraftfahrzeuges ausgerichtet ist, insbesondere dass das Schutzelement in einem Winkel α zur Standfläche ausgerichtet ist, der zwischen 10°≤ α ≤ 80°, insbesondere bevorzugt zwischen 30°≤ α ≤ 70° liegt. Die schräge Lage des Schutzelementes in seiner Schließstellung ist oftmals durch die geometrische Gestaltung der Karosserie, insbesondere im Heckbereich geschuldet. Vorteilhafterweise ist eine entsprechende Dichtung vorgesehen, die ein Eindringen von Flüssigkeit, Feuchtigkeit, Schmutzpartikel etc. in das Gehäuse verhindert. In der Offenstellung des Schutzelementes kann allerdings in das Gehäuse Flüssigkeit eindringen, die jedoch aufgrund der Doppelwandigkeit des Gehäuses zuverlässig in Richtung Austrittsöffnung leitbar ist.

Vorteilhafterweise kann ein Schlauchkörper an der Austrittsöffnung angeordnet sein. Der Schlauchkörper kann aus einem starren Material ausgeführt sein. Ebenfalls ist es möglich, dass das Material des Schlauchkörpers flexibel und/oder elastisch ist, sodass der Schlauchkörper in jegliche Geometrien innerhalb des Kraftfahrzeuges bringbar ist. Der Schlauchkörper kann vorteilhafterweise aus einem Kunststoff ausgebildet sein, insbesondere kann der Schlauchkörper mit einem Zusatzmaterial verstärkt sein, insbesondere kann das Zusatzmaterial aus Glasfaser, Kohlestofffaser, etc. ausgebildet sein.

Die Erfindung kann mit umfassen, dass ein Sicherheitselement vorgesehen ist, das ein Eindringen von Feuchtigkeit aus dem Außenbereich in das Gehäuse verhindert. Das Sicherheitselement kann im Schlauchkörper angeordnet sein, wobei insbesondere das Sicherheitselement ein Filterelement und/oder ein Ventilelement ist. Das Sicherheitselement hat die Aufgabe, dass vom Außenbereich durch den Schlauchkörper keine Flüssigkeit, Feuchtigkeit, etc. in das Gehäuse der Kameraeinheit eindringt. Beispielsweise ist es denkbar, dass während der Fahrt des Kraftfahrzeuges im Heckbereich ein gewisser Unterdruck sich einstellt, welches nachteiligerweise ein Eindringen von Flüssigkeit, Feuchtigkeit, etc. in den Schlauchkörper begünstigen kann. Das Sicherheitselement ist derart ausgebildet, dass lediglich Flüssigkeit, Feuchtigkeit, etc. vom Gehäuse nach außen transportiert werden kann, aber nicht in die entgegen gesetzte Richtung. Das Filterelement kann z. B. semipermeabel ausgebildet sein, insbesondere als Membran innerhalb des Schlauchkörpers eingesetzt sein. Ebenfalls ist es denkbar, dass das Sicherheitselement als Rückschlagventil ausgeführt ist und somit die oben genannte Funktion erfüllt.

In einer weiteren die Erfindung verbessernden Ausführungsform kann ein Halter am Gehäuse angeordnet sein, an dem eine Antriebseinheit zur Bewegung der Kameraeinheit befestigt ist, insbesondere dass der Halter zwischen dem Gehäuse und der Antriebseinheit sich befindet. Der Halter hat die Funktion, die Antriebseinheit an der definierten Position am Gehäuse befestigen zu können, wobei die Positionierung der Antriebseinheit über den Halter erfolgt. Die Anordnung des Halters sowie das Gehäuse und die Antriebseinheit kann sandwichartig sein. Hierdurch kann eine kompakte Gesamtbauweise der erfindungsgemäßen Vorrichtung erzielt werden, wobei gleichzeitig eine Montagefreundlichkeit erreichbar ist.

Zudem kann die Vorrichtung ein Schutzelement mit einem Schutzelementgehäuse aufweisen, wobei das Schutzelementgehäuse zwischen dem Gehäuse der Kameraeinheit und dem Schutzelement sich befindet. Das Schutzelement ist beweglich am Schutzelementgehäuse angeordnet. Das Schutzelementgehäuse kann Befestigungselemente bzw. Befestigungsmittel aufweisen, die dazu dienen, die erfindungsgemäße Vorrichtung am Kraftfahrzeug befestigen zu können. Sowohl das innere Gehäuse als auch das Schutzelementgehäuse können einen Durchbruch aufweisen, damit die Kameraeinheit in die aktive Position verfahren kann, um eine Bilderfassung im Heckbereich des Kraftfahrzeuges ausführen zu können. Das Schutzelementgehäuse kann des Weiteren Befestigungsschnittstellen für weitere Elemente, insbesondere elektronische Elemente umfassen, die am Schutzelementgehäuse befestigbar sind. Beispielsweise kann das Schutzelementgehäuse form- und/oder kraftschlüssig am Zusatzgehäuse befestigt sein. In einer möglichen Ausführungsform der erfindungsgemäßen Vorrichtung können erste und zweite Befestigungsmittel vorgesehen sein, die zur Befestigung des Schutzelementgehäuses am Zusatzgehäuse dienen, wobei die ersten Befestigungsmittel einen Formschluss bewirken und die zweiten Befestigungsmittel einen Kraftschluss bewirken. In einem ersten Montageschritt kann das Zusatzgehäuse über die ersten Befestigungsmittel am Schutzelementgehäuse angeordnet werden, wobei im zweiten Befestigungsschritt eine endgültige Fixierung des Schutzelementgehäuses am Zusatzgehäuse erfolgt, wobei die zweiten Befestigungsmittel auch reversibel lösbar sein können. Ebenfalls kann es vorgesehen sein, dass das erste Befestigungsmittel gelöst werden kann, sodass auch nachträglich das Zusatzgehäuse vom Schutzelementgehäuse entfernt werden kann, insbesondere im Reparaturfall, Wartungsfall, etc.

Ferner kann die Erfindung vorsehen, dass die Austrittsöffnung ein Anschlusselement zur Befestigung des Schlauchkörpers aufweist, wobei insbesondere das Anschlusselement an der Mantelfläche Vorsprünge aufweist, die als Befestigungsmittel zur Befestigung des Schlauchkörpers dienen. Die Vorsprünge des Anschlusselementes bewirken, dass ein Formschluss zwischen dem Schlauchkörper und dem Anschlusselement erzielt wird, sodass ein ungewolltes Loslösen des Schlauchkörpers von dem Zusatzgehäuse nahezu vermieden wird.

Vorteilhafterweise kann die erfindungsgemäße Vorrichtung eine geneigte Wand aufweisen, die das Zusatzgehäuse aufweist. Die Wand ist zur Standfläche des Kraftfahrzeuges geneigt angeordnet, damit etwaige Flüssigkeit aus dem Gehäuse in Richtung Austrittsöffnung abfließbar ist.

Bevorzugt kann das Schutzelement außenseitig ein Designelement und/oder ein Emblem aufweisen. Ein Emblem im Sinne der Erfindung ist insbesondere ein Kennzeichen für eine Kraftfahrzeugmarke, insbesondere eine Automobilmarke. Dabei kann das Emblem zweidimensional oder dreidimensional ausgebildet sein. Das Schutzelement kann des Weiteren mindestens ein optisches Anzeigeelement aufweisen, welches beispielsweise ein Leuchtmittel wie eine LED etc. umfassen kann. Hierdurch können unterschiedliche Anzeigefunktionen, Signalfunktionen, Informationen für den Außenbereich des Kraftfahrzeuges generiert werden.

Die Aufgabe der vorliegenden Erfindung wird zudem durch ein Verfahren gemäß aller Merkmale des Patentanspruches 15 gelöst.

Erfindungsgemäß wird ein Verfahren zur Montage einer Vorrichtung, die zur Bilderfassung des Außenbereiches eines Kraftfahrzeuges dient, vorgeschlagen, mit einem inneren Gehäuse, in dem eine bewegbare Kameraeinheit befestigbar ist, einem Zusatzgehäuse, das zumindest bereichsweise das innere Gehäuse umfasst, einem Halter, der derart am Zusatzgehäuse befestigt wird, dass gleichzeitig das innere Gehäuse am Zusatzgehäuse gehalten wird, wobei eine Antriebseinheit, die zur Bewegung der Kameraeinheit dient, am Halter und am inneren Gehäuse derart befestigt wird, dass der Halter zwischen dem Zusatzgehäuse und der Antriebseinheit liegt und sich eine Gehäusegruppe bildet, die gemeinsam an ein Schutzelementgehäuse für ein bewegbares Schutzelement angeordnet wird, indem das Zusatzgehäuse über Befestigungsmittel mit dem Schutzelementgehäuse befestigt wird. Ein besonderer Vorteil dieses Verfahrens ist, dass eine Gehäusegruppe gebildet wird, die für den Monteur ohne großen Montageaufwand an das Schutzelementgehäuse befestigt werden kann. Hierdurch wird eine kompakte Gesamtanordnung der erfindungsgemäßen Vorrichtung geschaffen, die wiederum über definierte Befestigungsschnittstellen am Kraftfahrzeug befestigbar ist. In einer möglichen Ausführungsform der Erfindung kann das Schutzelementgehäuse entsprechende Befestigungsschnittstellen aufweisen, um eine zuverlässige Befestigungswirkung am Kraftfahrzeug, insbesondere am Heckbereich des Kraftfahrzeuges zu erreichen.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht eines Kraftfahrzeuges mit einer im Heckbereich angeordneten Vorrichtung zur Bilderfassung eines Außenbereiches des Kraftfahrzeuges,
- Fig. 2: eine rein schematische Darstellung einer Vorrichtung mit Kameraeinheit zur Bilderfassung des Außenbereiches des Kraftfahrzeuges,
- Fig. 3: eine Explosionsdarstellung eines Gehäuses für eine Kameraeinheit gemäß Figur 1 oder Figur 2,
- Fig. 4: ein weiteres Ausführungsbeispiel einer Vorrichtung zur Bilderfassung des Außenbereiches eines Kraftfahrzeuges,
- Fig. 5: eine Detailansicht eines Teilbereiches des Gehäuses aus Figur 3 und
- Fig. 6: eine vergrößerte Ansicht bzgl. des Gehäuses für eine Vorrichtung zur Bilderfassung des Außenbereiches des Kraftfahrzeuges gemäß Figur 4.

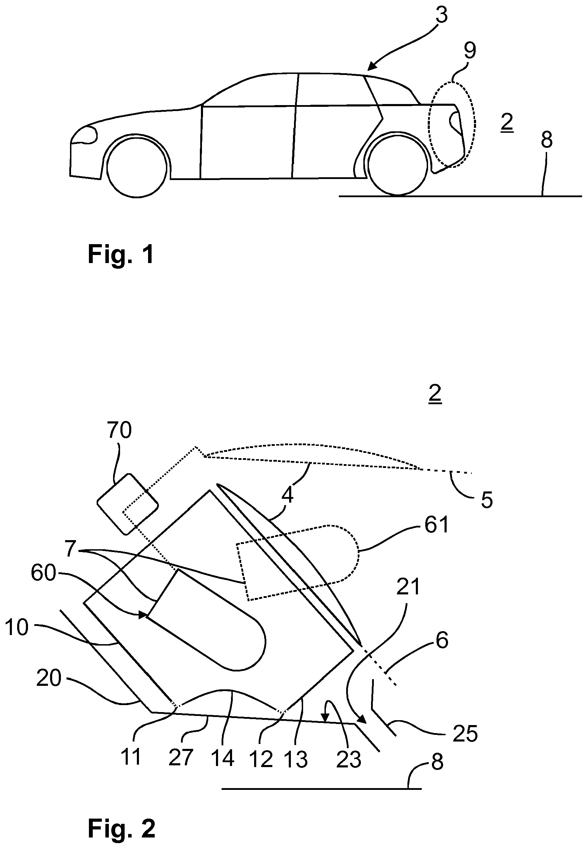

In Figur 1 ist ein Kraftfahrzeug 3 gezeigt, das im Heckbereich 9 eine Vorrichtung zur Bilderfassung des Außenbereiches 2 des Kraftfahrzeuges 1 aufweist. In Figur 2 ist in schematischer Darstellung eine mögliche Ausgestaltung der Vorrichtung zur Bilderfassung des Außenbereiches 2 des Kraftfahrzeuges 3 gezeigt. Hierbei weist die Vorrichtung eine Kameraeinheit 7 auf, die beweglich innerhalb eines Gehäuses 10, 20 bewegbar angeordnet ist. Die erfindungsgemäße Vorrichtung weist ein Schutzelement 4 auf, das zwischen einer Offenstellung 5 und einer Schließstellung 6 bewegt werden kann. In der Schließstellung 6 des Schutzelementes 4 nimmt die Kameraeinheit 7 eine Ruheposition 60 ein, in der die Kameraeinheit 7 vom Außenbereich 2 unzugänglich hinter dem Schutzelement 4 sich befindet. In der Offenstellung 5 des Schutzelementes 4 befindet sich die Kameraeinheit 7 in der aktiven Position 61, um eine Bilderfassung des Außenbereiches 2 durchzuführen.

Gemäß Figur 2 ist das Gehäuse 10, 20 bereichsweise doppelwandig ausgebildet. Hierbei weist das Gehäuse 10, 20 eine innere Wandung 13 sowie eine äußere Wandung 23 auf. Im vorliegenden Ausführungsbeispiel weist die innere Wandung 13 mehrere Öffnungen 11, 12 auf, die dazu dienen, möglicherweise eingetretene Flüssigkeit aus dem Gehäuse 10, 20 ausfließen zu lassen. Flüssigkeit kann z. B. in das Gehäuse 10, 20 eintreten, wenn sich die Kameraeinheit 3 in der aktiven Position 61 befindet und somit das Schutzelement 4 seine Offenstellung 5 einnimmt. In der Schließstellung 6 des Schutzelementes 4 ist das Gehäuse 10, 20 zuverlässig abgedichtet, sodass es ausgeschlossen ist, dass Flüssigkeit vom Außenbereich 2 in das Gehäuse 10, 20 gelangen kann. Beispielsweise ist es denkbar, dass eine Dichtung zwischen dem Schutzelement 4 und dem Gehäuse 10, 20 derart angeordnet ist, dass in der Ruheposition 60 die Kameraeinheit 7 zuverlässig vor äußeren Umwelteinflüssen geschützt ist.

Falls sich während der Bilderfassung des Außenbereiches 2 innerhalb des Gehäuses 10, 20 Flüssigkeit sammeln sollte, bewirken die Öffnungen 11, 12, dass die Flüssigkeit in Richtung äußere Wandung 23 gelangt und aufgrund der Geometrie der äußeren Wandung 23 in Richtung einer Austrittsöffnung 21 der äußeren Wandung 23 zum Außenbereich 2 abtransportierbar ist.

Je nach Einbausituation und den geometrischen Gegebenheiten innerhalb des Heckbereiches des Kraftfahrzeuges 3 ist es denkbar, die innere Wandung 13 auch mit nur einer Öffnung oder mit mehr als zwei Öffnungen zu versehen, um zuverlässig Flüssigkeit aus dem Gehäuse 10 abfließen zu lassen.

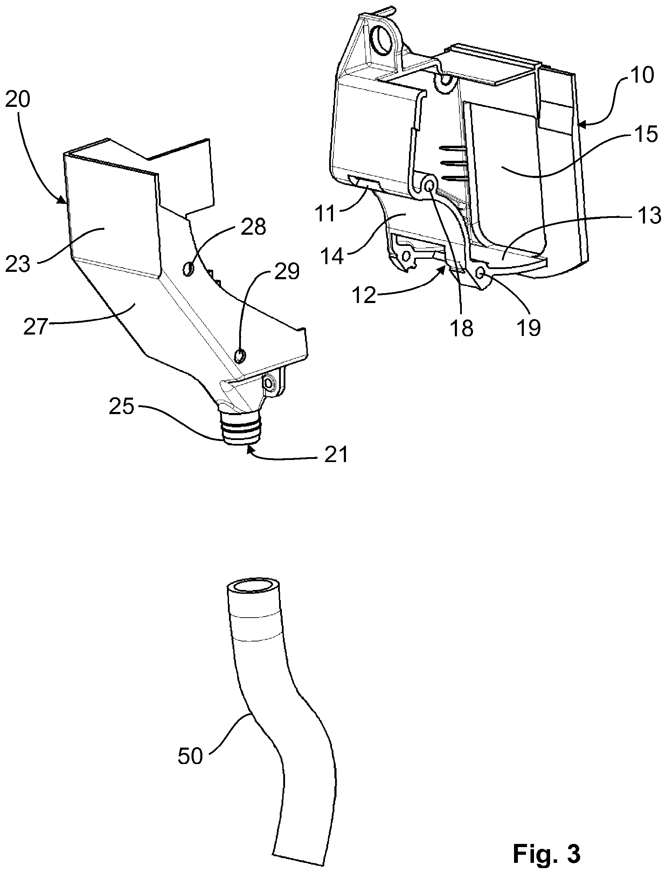

Gemäß der dargestellten Ausführungsbeispiele gemäß Figur 3 bis Figur 6 setzt sich das Gehäuse 10, 20 aus zwei einzelnen Gehäuseteilen zusammen, und zwar aus einem inneren Gehäuse 10, welches durch ein äußeres Zusatzgehäuse 20 zumindest teilweise umfasst ist. Hierdurch wird die Doppelwandigkeit erreicht. Das innere Gehäuse 10 ist mit der genannten inneren Wandung 13 ausgebildet und das Zusatzgehäuse 20 ist mit der Austrittsöffnung 21 ausgebildet. Wie in Figur 2 bis Figur 5 verdeutlicht ist, ist die äußere Wandung 23 des Zusatzgehäuses 20 im Austrittsöffnung 21 zugewandten Bereich trichterartig ausgebildet, damit zuverlässig Flüssigkeit aus dem Gehäuse 10, 20 abfließen kann.

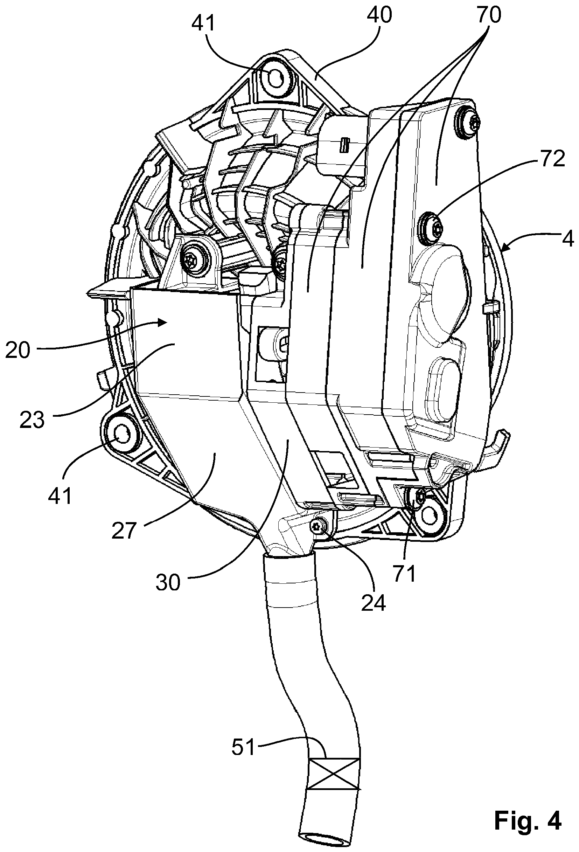

Die Öffnungen 11, 12 des inneren Gehäuses 10 sind oberhalb der Austrittsöffnung 21 bezogen auf die Standfläche 8 des Kraftfahrzeuges 3 (siehe Figur 1) angeordnet. Somit wird sichergestellt, dass Flüssigkeit aus dem inneren Gehäuse 10 in das Zusatzgehäuse 20 in Richtung Austrittsöffnung 21 fließen kann. In Figur 2 ist angedeutet, dass die Vorrichtung zur Bilderfassung des Außenbereiches 2 des Kraftfahrzeuges 3 schräg am Heckbereich angeordnet ist. Das bedeutet, dass in der Schließstellung 6 das Schutzelement 4 schräg zur Standfläche 8 des Kraftfahrzeuges 3 ausgerichtet ist. In der Offenstellung 5 des Schutzelementes 4 besteht somit verstärkt die Neigung, dass bei Regenflüssigkeit in das Gehäuse 10, 20 eindringen kann. Damit die Flüssigkeit zuverlässig aus dem Kraftfahrzeug 3 geleitet wird, ist an der Austrittsöffnung 21 ein Schlauchkörper 50 befestigt, welches in Figur 4 gezeigt ist. Je nach Geometrie und Einbaubedingungen innerhalb des Kraftfahrzeuges ist der Schlauchkörper 50 individuell ausrichtbar.

In Figur 4 ist des Weiteren die Möglichkeit gezeigt, dass ein Sicherheitselement 51 innerhalb der erfindungsgemäßen Vorrichtung zur Bilderfassung des Außenbereiches 2 vorgesehen sein kann, wobei das Sicherheitselement 51 das Eindringen von Feuchtigkeit aus dem Außenbereich 2 in das Gehäuse 10, 20, insbesondere in der Schließstellung 6 des Schutzelementes 4 verhindert. Beispielsweise ist es denkbar, dass während der Fahrt sich ein gewisser Unterdruck im Heckbereich des Kraftfahrzeuges 3 einstellen kann, wodurch ungewollterweise Feuchtigkeit durch den Schlauchkörper 50 in das Gehäuse 10, 20 eindringen kann. Beispielsweise ist es denkbar, ein Filterelement oder ein Ventilelement als Sicherheitselement 51 einzusetzen. Zum Beispiel ist eine semipermeable Membran als Sicherheitselement 51 denkbar oder auch ein Rückschlagventil. Sämtliche Ausführungsformen für das Sicherheitselement 51 erlauben, dass Flüssigkeit durch den Schlauchkörper 50 zum Außenbereich 20 gelangt, aber nicht umgekehrt.

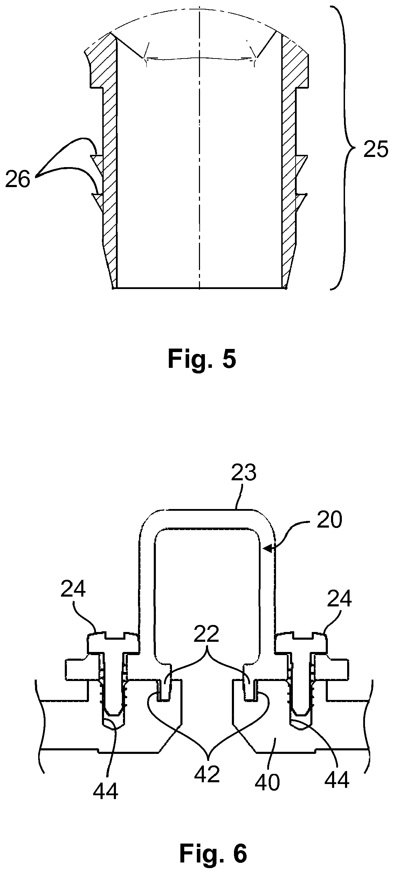

Damit die Kameraeinheit 7 zwischen der Ruheposition 60 und der aktiven Position 61 bewegt wird, ist eine Antriebseinheit 70 vorgesehen, die schematisch in Figur 2 gezeigt ist. Die Antriebseinheit 70 weist einen Elektromotor auf, der in Wirkverbindung mit der Kameraeinheit 7 und/oder dem Schutzelement 4 ist. Hierbei sind unterschiedliche Kinematiken, Mechanismen etc. denkbar, um die Kameraeinheit 7 sowie das Schutzelement 4 in die jeweilige Stellung bzw. Position zu bringen. In Figur 4 ist eine mögliche Ausführungsform gezeigt, die es ermöglicht auf kompakte Weise die Antriebseinheit 70 über einen Halter 30 am Gehäuse 10, 20 zu befestigen. Bevor jedoch die Antriebseinheit 70 befestigt wird, erfolgt gemäß Figur 3 eine Fixierung des Zusatzgehäuses 20 am inneren Gehäuse 10, und zwar indem ein nicht explizit dargestelltes Befestigungsmittel durch den oberen Durchbruch 28 des Zusatzgehäuses 20 sowie durch die Befestigungsöffnung 18 des inneren Gehäuses 10 geführt wird und somit eine zuverlässige Fixierung beider Gehäuseteile 10, 20 zu bewirken. Anschließend wird der Halter 30 mit der Antriebseinheit 70 an die Gehäusebaugruppe 10, 20 geführt, wobei ein Befestigungsmittel, insbesondere eine Schraube 71 zum Einsatz kommt, die durch die Antriebseinheit 70, den Halter 30, durch den Durchbruch 29 des Zusatzgehäuses 20 sowie durch die Befestigungsöffnungen 19 des inneren Gehäuses 10 sich erstreckt. Ein weiteres Befestigungsmittel 62, insbesondere eine Schraube bewirkt eine weitere Fixierung der Antriebseinheit 70 mit dem Halter 30. Ist die Gehäusegruppe, die sich zusammensetzt aus dem inneren Gehäuse 10, dem Zusatzgehäuse 20, dem Halter 30 sowie der Antriebseinheit 70, gebildet, erfolgt eine Befestigung dieser Gehäusegruppe mit einem Schutzelementgehäuse 40 des Schutzelementes 4, siehe Figur 4. Das Schutzelementgehäuse 40 ist zwischen dem Gehäuse 10, 20 der Kameraeinheit 7 und dem Schutzelement 4 positioniert. Die Fixierung der oben genannten Gehäusegruppe erfolgt lediglich über das Zusatzgehäuse 20, wobei die Befestigung über ein erstes Befestigungsmittel 22, 42 und ein zweites Befestigungsmittel 24, 44 erfolgt. Gemäß Figur 6 ist das erste Befestigungsmittel 22 des Zusatzgehäuses 20 vorsprungartig ausgebildet, wobei das Befestigungsmittel 22 in eine entsprechende Nut 42 des Schutzelementgehäuses 40 formschlüssig eingreift. Damit dieser Befestigungszustand zwischen dem Zusatzgehäuse 20 und dem Schutzelementgehäuse 40 dauerhaft sichergestellt ist, erfolgt eine endgültige Fixierung über das zweite Befestigungsmittel 24, hier Schraubenelement, das in eine entsprechende Vertiefung 44 im Schutzelementgehäuse 40 eindringen kann. Die ersten Befestigungsmittel 22, 42 üben einen Formschluss zwischen dem Zusatzgehäuse 20 und dem Schutzelement 40 aus. Die zweiten Befestigungsmittel 24, 44 bewirken darüber hinaus, dass ein Kraftschluss zwischen beiden Gehäuseteilen 20, 40 entsteht.

In Figur 3 ist gezeigt, dass das Zusatzgehäuse 20 eine geneigte Wand 27 aufweist, die bezogen auf die Standfläche 8 gemäß Figur 1 geneigt ist, sodass etwaige Flüssigkeit in Richtung Austrittsöffnung 21 abfließen kann. Des Weiteren ist aus Figur 3 ersichtlich, dass das innere Gehäuse 10 einen Bereich innerhalb der inneren Wandung 13 aufweist, der Verstärkungseigenschaften aufweist. Der Bereich 14 der inneren Wandung 13 ist nach innen gewölbt, insbesondere in Richtung Kameraeinheit 7, wodurch die Gesamtkonstruktion des inneren Gehäuses 10 verstärkt wird. Sämtliche Gehäuseteile 10, 20, 40 sowie Gehäuseteile der Antriebseinheit 70 sind aus einem Kunststoff, insbesondere einem Polyamid ausgebildet. Der Kunststoff kann gemäß spezieller Anforderungen verstärkt sein, beispielsweise über einen Zusatz an Glasfaser, Kohlenstofffaser etc.

Damit der Schlauchkörper 50 zuverlässig am Gehäuse 10, 20 befestigt ist, weist die Austrittsöffnung 21 ein Anschlusselement 25 auf, an dem der Schlauchkörper 50 fixiert ist. Das Anschlusselement 25 ist an seiner Mantelfläche mit Vorsprüngen 26 ausgebildet, die als Befestigungsmittel zur zuverlässigen Fixierung des Schlauchkörpers 50 dienen. Diese Vorsprünge 26 sind in vergrößerter Darstellung in Figur 5 gezeigt. Die Vorsprünge 26 dienen hauptsächlich dazu, dass der Schlauchkörper 50 sich nicht wieder ungewollt vom Anschlusselement 25 löst.

Gemäß Figur 4 ist des Weiteren die erfindungsgemäße Vorrichtung im komplett zusammengebauten Zustand gezeigt, die anschließend am Kraftfahrzeug bzw. an der Kraftfahrzeugkarosserie befestigt werden kann. Hierfür weist das Schutzelementgehäuse 40 Befestigungsschnittstellen 41 auf, die eine leichte Montage des Schutzelementgehäuses 40 am Kraftfahrzeug ermöglichen. Im vorliegenden Ausführungsbeispiel sind die Befestigungsschnittstellen 41 als Durchbrüche bzw. Öffnungen ausgeführt, durch die z. B. Schraubenelemente hindurchführbar sind.

### Bezugszeichenliste

- 2: Außenbereich
- 3: Kraftfahrzeug
- 4: Schutzelement
- 5: Offenstellung
- 6: Schließstellung
- 7: Kameraeinheit
- 8: Standfläche
- 9: Heckbereich

- 10: inneres Gehäuse
- 11: erste Öffnung
- 12: zweite Öffnung
- 13: innere Wandung
- 18: Befestigungsöffnung
- 19: Befestigungsöffnung

- 20: Zusatzgehäuse
- 21: Austrittsöffnung
- 22: erstes Befestigungsmittel
- 23: äußere Wandung
- 24: zweites Befestigungsmittel
- 25: Anschlusselement
- 26: Vorsprung
- 27: geneigte Wand
- 28: Durchbruch

- 30: Halter
- 40: Schutzelementgehäuse
- 41: Befestigungsschnittstelle
- 42: erstes Befestigungsmittel
- 44: zweites Befestigungsmittel

- 50: Schlauchkörper
- 51: Sicherheitselement

- 60: Ruheposition
- 61: aktive Position,
- 62: Befestigungsmittel, Schraube

- 70: Antriebseinheit
- 71: Befestigungsmittel, Schraube
- 72: Befestigungsmittel, Schraube

## Patentansprüche

1. Vorrichtung mit einer Kameraeinheit (7), die zur Bilderfassung des Außenbereiches (2) eines Kraftfahrzeuges (3) dient, mit
einem Gehäuse (10, 20), in dem die Kameraeinheit (7) bewegbar angeordnet ist,
einem Schutzelement (4), das zwischen einer Offenstellung (5) und einer Schließstellung (6) bringbar ist, wobei
in der Schließstellung (6) des Schutzelementes (4) die Kameraeinheit (7) eine Ruheposition (60) einnimmt, in der die Kameraeinheit (7) vom Außenbereich (2) unzugänglich hinter dem Schutzelement (4) sich befindet,
in der Offenstellung (5) des Schutzelementes (4) die Kameraeinheit (7) sich in der aktiven Position (61) zur Bilderfassung befindet,
**dadurch gekennzeichnet,**
**dass** das Gehäuse (10, 20) zumindest bereichsweise derart doppelwandig ausgebildet ist, dass das Gehäuse (10, 20) eine innere Wandung (13) mit zumindest einer Öffnung (11, 12) aufweist und das Gehäuse (10, 20) eine äußere Wandung (23) aufweist, die mit einer Austrittsöffnung (21) ausgebildet ist, wodurch etwaig im Gehäuse (10, 20) sich befindende Flüssigkeit zum Außenbereich (2) abtransportierbar ist.

2. Vorrichtung nach Anspruch 1,
**dadurch gekennzeichnet,**
**dass** das Gehäuse (10, 20) ein inneres Gehäuse (10) und ein zum inneren Gehäuse (10) angeordnetes äußeres Zusatzgehäuse (20) aufweist, wobei das innere Gehäuse (10) mit der inneren Wandung (13) ausgebildet ist und das Zusatzgehäuse (20) die Austrittsöffnung (21) aufweist.

3. Vorrichtung nach Anspruch 1 oder 2,
**dadurch gekennzeichnet,**
**dass** die äußere Wandung (23) im der Austrittsöffnung (21) zugewandten Bereich trichterartig ausgebildet ist.

4. Vorrichtung nach einem der vorhergehenden Ansprüche,
**dadurch gekennzeichnet,**
**dass** die Öffnung (11, 12) der inneren Wandung (13) oberhalb bezogen auf die Standfläche (8) des Kraftfahrzeuges (3) zur Austrittsöffnung (21) angeordnet ist.

5. Vorrichtung nach einem der vorhergehenden Ansprüche,
**dadurch gekennzeichnet,**
**dass** in der Schließstellung (6) das Schutzelement (4) schräg zur Standfläche (8) des Kraftfahrzeuges (3) ausgerichtet ist, insbesondere dass das Schutzelement (4) in einem Winkel α zur Standfläche (8) ausgerichtet ist, der zwischen 10°≤ α ≤ 80°, insbesondere bevorzugt zwischen 30°≤ α ≤ 70° liegt.

6. Vorrichtung nach einem der vorhergehenden Ansprüche,
**dadurch gekennzeichnet,**
**dass** ein Schlauchkörper (50) an der Austrittsöffnung (21) angeordnet ist.

7. Vorrichtung nach einem der vorhergehenden Ansprüche,
**dadurch gekennzeichnet,**
**dass** ein Sicherheitselement (51) vorgesehen ist, das ein Eindringen von Feuchtigkeit aus dem Außenbereich (2) in das Gehäuse (10, 20) verhindert.

8. Vorrichtung nach Anspruch 7,
**dadurch gekennzeichnet,**
**dass** das Sicherheitselement (51) im Schlauchkörper (50) angeordnet ist, wobei insbesondere das Sicherheitselement (51) ein Filterelement und/oder ein Ventilelement ist.

9. Vorrichtung nach einem der vorhergehenden Ansprüche,
**dadurch gekennzeichnet,**
**dass** ein Halter (30) am Gehäuse (10, 20) angeordnet ist, an dem eine Antriebseinheit (70) zur Bewegung der Kameraeinheit (7) befestigt ist, insbesondere dass der Halter (30) zwischen dem Gehäuse (10, 20) und der Antriebseinheit (70) sich befindet.

10. Vorrichtung nach einem der vorhergehenden Ansprüche,
**dadurch gekennzeichnet,**
**dass** das Schutzelement (4) ein Schutzelementgehäuse (40) aufweist, wobei das Schutzelementgehäuse (40) zwischen dem Gehäuse (10, 20) der Kameraeinheit (7) und dem Schutzelement (4) sich befindet.

11. Vorrichtung nach Anspruch 10,
**dadurch gekennzeichnet,**
**dass** das Schutzelementgehäuse (40) form-und/oder kraftschlüssig am Zusatzgehäuse (20) befestigt ist.

12. Vorrichtung nach Anspruch 10 oder 11,
**dadurch gekennzeichnet,**
**dass** erste (22) und zweite Befestigungsmittel (24) vorgesehen sind, die zur Befestigung des Schutzelementgehäuses (40) am Zusatzgehäuse (20) dienen, wobei die ersten Befestigungsmittel (42) einen Formschluss bewirken und die zweiten Befestigungsmittel (44) einen Kraftschluss bewirken.

13. Vorrichtung nach einem der vorhergehenden Ansprüche,
**dadurch gekennzeichnet,**
**dass** die Austrittsöffnung (21) ein Anschlusselement (25) zur Befestigung des Schlauchkörpers (50) aufweist, wobei insbesondere das Anschlusselement (25) an der Mantelfläche Vorsprünge (26) aufweist, die als Befestigungsmittel zur Befestigung des Schlauchkörpers (50) dienen.

14. Vorrichtung nach einem der vorhergehenden Ansprüche,
**dadurch gekennzeichnet,**
**dass** das Zusatzgehäuse (20) mit einer zur Standfläche (8) geneigten Wand (27) ausgebildet ist, so dass etwaige Flüssigkeit in Richtung Austrittsöffnung (21) abfließbar ist.

15. Verfahren zur Montage einer Vorrichtung, die zur Bilderfassung des Außenbereiches (2) eines Kraftfahrzeuges (3) dient, nach einem der vorhergehenden Ansprüche 1 bis 14, mit
einem inneren Gehäuse (10, 20), in dem eine bewegbare Kameraeinheit (7) befestigbar ist,
einem Zusatzgehäuse (20), das zumindest bereichsweise das innere Gehäuse (10) umfasst,
einem Halter (30), der derart am Zusatzgehäuse (20) befestigt wird, dass gleichzeitig das innere Gehäuse (10, 20) am Zusatzgehäuse (20) gehalten wird, wobei
eine Antriebseinheit (70), die zur Bewegung der Kameraeinheit (7) dient, am Halter (30) und am inneren Gehäuse (10, 20) derart befestigt wird, dass der Halter (30) zwischen dem Zusatzgehäuse (20) und der Antriebseinheit (70) liegt und sich eine Gehäusegruppe (10, 20, 30, 70) bildet, die gemeinsam an ein Schutzelementgehäuse (40) für ein bewegbares Schutzelement (4) angeordnet wird, indem das Zusatzgehäuse (20) über Befestigungsmittel (22, 24) mit dem Schutzelementgehäuse (40) befestigt wird.

## Claims

1. Device with a camera unit (7), which serves for image recording of the outside region (2) of a motor vehicle (3), with a housing (10, 20), in which the camera unit (7) is movably arranged,
a protective element (4), which can be moved between an open position (5) and a closed position (6), wherein
in the closed position (6) of the protective element (4) the camera unit (7) assumes an idle position (60), in which the camera unit (7) is inaccessible from the outside region (2) behind the protective element (4),
in the open position (5) of the protective element (4) the camera unit (7) is in the active position (61) for image recording,
**characterized in that**
the housing (10, 20) is configured at least partially double-walled in a way that the housing (10, 20) comprises an inner wall (13) with at least one opening (11, 12) and the housing (10, 20) comprises an outer wall (23), which is configured with an outlet opening (21), wherein possible fluid within the housing (10, 20) is transportable towards the outside region (2).

2. Device according to claim 1,
**characterized in that**
the housing (10, 20) comprises an inner housing (10) and an outer additional housing (20), which is arranged towards the inner housing (10), wherein the inner housing (10) is configured with an inner wall (13) and the additional housing (20) comprises the outlet opening (21).

3. Device according to claim 1 or 2,
**characterized in that**
the outer wall (23) is configured funnel-like in the area facing the outlet opening (21).

4. Device according to one of the preceding claims,
**characterized in that**
the opening (11, 12) of the inner wall (13) is assembled above the outlet opening (21) in relation to the stand space (8) of the motor vehicle (3).

5. Device according to one of the preceding claims,
**characterized in that**
in the closed position (6) the protective element (4) is adjusted inclined towards the stand space (8) of the motor vehicle (3), particularly that the protective element (4) is adjusted in an angle α towards the stand space (8), which is between 10°≤ α ≤ 80°, preferably between 30°≤ α ≤ 70°.

6. Device according to one of the preceding claims,
**characterized in that**
a tube body (50) is arranged at the outlet opening (21).

7. Device according to one of the preceding claims,
**characterized in that**
a security system (51) is provided, which prevents a penetration of moisture from the outside region (2) into the housing (10, 20).

8. Device according to claim 7,
**characterized in that**
the security element (51) is arranged in the tube body (50), wherein particularly the security element (51) is a filter element and/or a valve element.

9. Device according to one of the preceding claims,
**characterized in that**
a support (30) is arranged at the housing (10, 20), at which a drive unit (70) is mounted for moving the camera unit (7), particularly that the support (30) is located between the housing (10, 20) and the drive unit (70).

10. Device according to one of the preceding claims,
**characterized in that**
the protective element (4) comprises a protective element housing (40), wherein the protective element housing (40) is located between the housing (10, 20) of the camera unit (7) and the protective element (4).

11. Device according to claim 10,
**charactrizd in that**
the protective element housing (40) is mounted on the additional housing (20) in a form- and/or force-fitting manner.

12. Device according to claim 10 or 11,
**characterized in that**
first (22) and second fastening means (24) are provided, which serve for the mounting of the protective element housing (40) at the additional housing (20), wherein the first fastening means (42) effect a form fit and the second fastening means (44) effect a force fit.

13. Device according to one of the preceding claims,
**characterized in that**
the outlet opening (21) comprises a connecting element (25) for mounting tube body (50), wherein particularly the connecting element (25) comprises protrusions (26) at the surface area, which serve as fastening means for mounting the tube body (50).

14. Device according to one of the preceding claims,
**characterized in that**
the additional housing (20) is configured with an inclined wall (27) towards the stand space (8), so that possible fluid can drain off into the direction of the outlet opening (21).

15. Method for mounting a device, which serves for image recording of the outside region (2) of a motor vehicle (3), according to one of the preceding claims 1 to 14, with an inner housing (10), in which a movable camera unit (7) is mountable,
an additional housing (20), which is at least partially covering the inner housing (10),
a support (30), which is mounted on the additional housing (20) in a way that at the same time the inner housing (10) is kept at the additional housing (20), wherein
a drive unit (70), which serves for moving the camera unit (7) is mounted on the support (30) and the inner housing (10) in a way that the support (30) is located between the additional housing (20) and the drive unit (70) and a housing composition (10, 20, 30, 70) is established, which is, together with a protective element housing (40), arranged for a movable protective element (4), in that the additional housing (20) is mounted on the protective element housing (40) via fastening means (22, 24).

## Revendications

1. Dispositif équipé d'une unité à caméra (7) servant à la capture d'images de la région extérieure (2) d'un véhicule automobile (3), comprenant
un boîtier (10, 20) dans lequel ladite unité à caméra (7) est logée avec mobilité,
un élément de protection (4) pouvant être déplacé entre une position d'ouverture (5) et une position de fermeture (6), sachant que,
dans la position de fermeture (6) de l'élément de protection (4), l'unité à caméra (7) occupe un emplacement de repos (60) dans lequel ladite unité à caméra (7) se trouve derrière ledit élément de protection (4), avec inaccessibilité depuis ladite région extérieure (2),
dans la position d'ouverture (5) dudit élément de protection (4), ladite unité à caméra (7) occupe l'emplacement actif (61) dévolu à la capture d'images,
**caractérisé par le fait**
**que** le boîtier (10, 20) est réalisé avec paroi double, au moins par zones, de façon telle que ledit boîtier (10, 20) présente une paroi intérieure (13) munie d'au moins un orifice (11, 12), et que ledit boîtier (10, 20) comporte une paroi extérieure (23) dotée d'un orifice de sortie (21), si bien que du liquide, éventuellement présent dans ledit boîtier (10, 20), peut être évacué vers la région extérieure (2).

2. Dispositif selon la revendication 1,
**caractérisé par le fait**
**que** le boîtier (10, 20) comprend un compartiment intérieur (10) et un compartiment additionnel (20) implanté à l'extérieur par rapport audit compartiment intérieur (10), ledit compartiment intérieur (10) étant pourvu de la paroi intérieure (13), et ledit compartiment additionnel (20) présentant l'orifice de sortie (21).

3. Dispositif selon la revendication 1 ou 2,
**caractérisé par le fait**
**que** la paroi extérieure (23) est de réalisation du type infundibuliforme c'est-à-dire en forme d'entonnoir dans la région tournée vers l'orifice de sortie (21).

4. Dispositif selon l'une des revendications précédentes,
**caractérisé par le fait**
**que** l'orifice (11, 12) de la paroi intérieure (13) est placé au-dessus de l'orifice de sortie (21) en considérant par rapport à la surface d'assise (8) du véhicule automobile (3).

5. Dispositif selon l'une des revendications précédentes,
**caractérisé par le fait**
**que**, dans la position de fermeture (6), l'élément de protection (4) est orienté à l'oblique par rapport à la surface d'assise (8) du véhicule automobile (3) ; notamment par le fait que ledit élément de protection (4) est orienté, par rapport à ladite surface d'assise (8), en décrivant un angle α mesurant 10° ≤ α ≤ 80°, en particulier, de préférence, 30° ≤ α ≤ 70°.

6. Dispositif selon l'une des revendications précédentes,
**caractérisé par le fait**
**qu'**un corps (50) en tuyau souple est implanté au niveau de l'orifice de sortie (21).

7. Dispositif selon l'une des revendications précédentes,
**caractérisé par**
la présence d'un élément de sécurité (51), qui empêche une insinuation d'humidité dans le boîtier (10, 20) à partir de la région extérieure (2).

8. Dispositif selon la revendication 7,
**caractérisé par le fait**
**que** l'élément de sécurité (51) est logé dans le corps (50) en tuyau souple, ledit élément de sécurité (51) se présentant, en particulier, comme un élément de filtration et/ou comme un élément de soupape.

9. Dispositif selon l'une des revendications précédentes,
**caractérisé par le fait**
**qu'**un support (30), auquel est fixée une unité d'entraînement (70) affectée à la mise en mouvement de l'unité à caméra (7), est installé sur le boîtier (10, 20) ; notamment par le fait que ledit support (30) est interposé entre ledit boîtier (10, 20) et ladite unité d'entraînement (70).

10. Dispositif selon l'une des revendications précédentes,
**caractérisé par le fait**
**que** l'élément de protection (4) comporte un carter (40). ledit carter (40) de l'élément de protection étant interposé entre ledit élément de protection (4) et le boîtier (10, 20) de l'unité à caméra (7).

11. Dispositif selon la revendication 10,
**caractérisé par le fait**
**que** le carter (40) de l'élément de protection est fixé au compartiment additionnel (20) par complémentarité de formes, et/ou par engagement positif.

12. Dispositif selon la revendication 10 ou 11,
**caractérisé par**
la présence de premier (22) et second (24) moyens de fixation servant à fixer le carter (40) de l'élément de protection au compartiment additionnel (20), sachant que les premiers moyens de fixation (42) procurent un assemblage par complémentarité de formes, et que les seconds moyens de fixation (44) instaurent un engagement positif.

13. Dispositif selon l'une des revendications précédentes,
**caractérisé par le fait**
**que** l'orifice de sortie (21) comporte un élément de rattachement (25) dévolu à la fixation du corps (50) en tuyau souple, ledit élément de rattachement (25) étant notamment pourvu, sur la surface de son enveloppe, de saillies (26) servant de moyens de fixation en vue de fixer ledit corps (50) en tuyau souple.

14. Dispositif selon l'une des revendications précédentes,
**caractérisé par le fait**
**que** le compartiment additionnel (20) est doté d'une paroi (27) inclinée vers la surface d'assise (8), de telle sorte qu'un éventuel liquide puisse s'écouler en direction de l'orifice de sortie (21).

15. Procédé de montage d'un dispositif conforme à l'une des revendications précédentes 1 à 14, servant à la capture d'images de la région extérieure (2) d'un véhicule automobile (3) et comprenant
un compartiment intérieur (10), dans lequel peut être fixée une unité à caméra (7) douée de mobilité,
un compartiment additionnel (20) entourant ledit compartiment intérieur (10), au moins par zones,
un support (30) fixé, audit compartiment additionnel (20), d'une manière propre à retenir simultanément ledit compartiment intérieur (10) sur ledit compartiment additionnel (20), sachant
qu'une unité d'entraînement (70) affectée à la mise en mouvement de ladite unité à caméra (7) est fixée, audit support (30) et audit compartiment intérieur (10), de façon telle que ledit support (30) se trouve entre ledit compartiment additionnel (20) et ladite unité d'entraînement (70), et qu'il se forme un ensemble d'enveloppement (10, 20, 30, 70) conjointement mis en place sur un carter (40) dédié à un élément de protection (4) doué de mobilité, ledit compartiment additionnel (20) étant fixé audit carter (40) de l'élément de protection par l'intermédiaire de moyens de fixation (22, 24).
